# EUROPEAN PATENT SPECIFICATION

(11) **EP 2 832 227 B1**
(45) Date of publication and mention of the grant of the patent: **04.07.2018**
(21) Application number: 13768180.5
(22) Date of filing: 29.03.2013
(51) Int. Cl.: A23D 9/00, C11B 5/00

(54) **OIL/FAT COMPOSITION**
ÖL/FETT-ZUSAMMENSETZUNG
COMPOSITION D'HUILE/GRAISSE

(30) Priority: 30.03.2012 JP 2012078600
(43) Date of publication of application: 04.02.2015
(73) Proprietor: Kao Corporation, Chuo-ku Tokyo 103-8210 (JP)
(72) Inventor: MATSUDA, Yuumi, Tokyo 131-8501 (JP)
(74) Representative: Hoffmann Eitle
(86) International application number: PCT/JP2013/059481
(87) International publication number: WO 2013/147130

(56) References cited:
- JP-A- H10 263 064
- JP-A- 2003 102 382
- GURDIP SINGH ET AL: "Chemical Constituents, Antifungal and Antioxidative Effects of Ajwain Essential Oil and Its Acetone Extract", JOURNAL OF AGRICULTURAL AND FOOD CHEMISTRY, vol. 52, no. 11, 1 June 2004 (2004-06-01), pages 3292-3296, XP055217764, ISSN: 0021-8561, DOI: 10.1021/jf035211c
- YANG JIANG ET AL: "Chemical composition and antimicrobial activity of the essential oil of Rosemary", ENVIRONMENTAL TOXICOLOGY AND PHARMACOLOGY, ELSEVIER, AMSTERDAM, NL, vol. 32, no. 1, 23 March 2011 (2011-03-23) , pages 63-68, XP028225214, ISSN: 1382-6689, DOI: 10.1016/J.ETAP.2011.03.011 [retrieved on 2011-03-30]
- JIROVETZ ET AL: "Composition, quality control, and antimicrobial activity of the essential oil of long-time stored dill (Anethum graveolens L.) seeds from Bulgaria", JOURNAL OF AGRICULTURAL AND FOOD CHEMISTRY, AMERICAN CHEMICAL SOCIETY, US, vol. 51, no. 13, 1 January 2003 (2003-01-01), page 3857, XP002461226, ISSN: 0021-8561, DOI: 10.1021/JF030004Y
- CALSAMIGLIA S ET AL: "Invited Review: Essential Oils as Modifiers of Rumen Microbial Fermentation", JOURNAL OF DAIRY SCIENCE, AMERICAN DAIRY SCIENCE ASSOCIATION, US, vol. 90, no. 6, 1 June 2007 (2007-06-01), pages 2580-2595, XP026955927, ISSN: 0022-0302 [retrieved on 2007-06-01]
- HASAN YALCIN ET AL: "Effect of [gamma]-Irradiation on Bioactivity, Fatty Acid Compositions and Volatile Compounds of Clary Sage Seed (Salvia sclarea?L.)", JOURNAL OF FOOD SCIENCE, vol. 76, no. 7, 20 September 2011 (2011-09-20), pages C1056-C1061, XP055217738, ISSN: 0022-1147, DOI: 10.1111/j.1750-3841.2011.02331.x
- TAARIT M B ET AL: "Changes in fatty acid and essential oil composition of sage (Salvia officinalis L.) leaves under NaCl stress", FOOD CHEMISTRY, ELSEVIER LTD, NL, vol. 119, no. 3, 1 April 2010 (2010-04-01) , pages 951-956, XP026754866, ISSN: 0308-8146, DOI: 10.1016/J.FOODCHEM.2009.07.055 [retrieved on 2009-08-04]
- FRANKEL, E.N. ET AL.: 'Antioxidant Activity of a Rosemary Extract and Its Constituents, Carnosic Acid, Carnosol, and Rosmarinic Acid, in Bulk Oil and Oil-in-Water Emulsion' JOURNAL OF AGRICULTURAL AND FOOD CHEMISTRY vol. 44, no. 1, 18 January 1996, pages 131 - 135, XP000546463

## Description

### Field of the Invention

The present invention relates to a fat or oil composition. The scope of the present invention is defined by the product as set out in the claims.

### Background of the Invention

With increasing health consciousness in recent years, many studies have been made on functions of fatty acids in fats or oils. For example, ω3-highly unsaturated fatty acids such as α-linolenic acid, eicosapentaenoic acid, and docosahexaenoic acid are known to be effective in preventing coronary artery disease and stroke, or the like. In addition, the fatty acids cannot be synthesized in the body, and lack of the fatty acids causes development of dermatitis or the like. Therefore, use of fats or oils containing the fatty acids has been desired, and in 2005, the Ministry of Health, Labour and Welfare defined a recommended total intake (adult) of ω3-highly unsaturated fatty acids including α-linolenic acid of 1 g/day.

On the other hand, an α-linolenic acid-rich fat or oil has very low oxidative stability and is liable to produce deterioration odor and unpleasant odor/taste, and hence practical realization thereof is significantly restricted.

As technologies for improving oxidative stability of a fat or oil, there have been known, for example, a method involving adding a tocopherol to a *Lamiaceae* oil (Patent Document 1) and a method involving adding a roasted sesame oil, an ascorbic acid ester, and an herb extract to a fat or oil containing a polyunsaturated fatty acid to stabilize the fat or oil (Patent Document 2), or the like.

Further, as antioxidants, there have been known a lipophilic antioxidant containing a bayberry extract and a rosemary extract, or the like (Patent Document 3), a lipophilic antioxidant containing gallic acid, a water-soluble antioxidant, and an oil-soluble antioxidant (Patent Document 4), and an antioxidant composition including an acetone extract of tea leaves in combination with a tocopherol and an ascorbic acid ester (Patent Document 5). In addition, the rosemary extract has been known to have high antioxidative property (Non Patent Document 1), and an antioxidant including a rosemary extract that includes hexanal, carnosol, and carnosic acid in specified amounts (Patent Document 6), or the like have been reported.

J. Agric. Food Chem. 2004, 52, 3292-3296) relates to the chemical constituents and properties of Ajwain Essential Oil and its acetone extract.

### Citation List

### Patent Document

[Patent Document 1] JP-A-8-116878
[Patent Document 2] JP-A-2-189394
[Patent Document 3] JP-A-2007-185138
[Patent Document 4] JP-A-2002-142673
[Patent Document 5] JP-A-02-55785
[Patent Document 6] JP-A-2004-204212

### Non Patent Document

[Non Patent Document 1] "Agric. Food Chem. ", 1996, Vol. 44, No. 1, p. 131-135

### Summary of the Invention

The present invention provides a fat or oil composition, comprising the following components (A), (B), and (C): (A) a fat or oil comprising constituent fatty acids comprising from 15 to 60 mass% of α-linolenic acid; (B) from 0.001 to 0.18 mass% of a rosemary extract; and (C) a dill extract, in which a mass ratio of a content of the component (B) to a content of the component (C), [(B)/(C)], is from 2 to 200 wherein the rosemary extract is obtained by subjecting any one or more parts selected from the group consisting of leaf, stem, germ, flower, branch, root, and seed of rosemary to a step of extraction without additional treatment, or extraction after pulverization, cutting, or drying, using water, water vapor, an alcohol, subcritical or supercritical carbon dioxide, an edible fat or oil or a mixture thereof as extraction solvent, and the dill extract is obtained by subjecting any one or more parts selected from the group consisting of leaf, stem, germ, flower, branch, root, fruit, and seed of dill to a step of extraction without additional treatment, or extraction after pulverization, cutting, or drying, using water, water vapor, an alcohol, subcritical or supercritical carbon dioxide, an edible fat or oil or a mixture thereof as extraction solvent.

### Detailed Description of the Invention

However, the technologies described above have a problem in that degradation odor is liable to be generated because of insufficient antioxidative property at the time of heating. The technologies also have the following problem. A plant extract, in particular, a rosemary extract has very strong flavor, and hence original taste and flavor of a cooked food is hardly sensed when a fat or oil containing the rosemary extract is used for cooking. Therefore, the amount of the fat or oil to be added is inevitably restricted, and it is difficult to improve oxidative stability of the fat or oil.

Therefore, the present invention relates to providing a fat or oil composition having high oxidative stability even though containing a large amount of α-linolenic acid, and having suppressed degradation odor and unpleasant odor derived from a rosemary extract at the time of cooking.

The inventor of the present invention made intensive studies to solve the above-mentioned problems. As a result, the inventor found that incorporation of a combination of a rosemary extract and a specific plant extract at a specific ratio into a fat or oil was able to impart high oxidative stability and to suppress degradation odor at the time of cooking and strong odor derived from a plant such as rosemary, to thereby provide a fat or oil composition enabling good taste and flavor of a cooked food to be sensed.

According to the present invention, there is provided a fat or oil composition that has high oxidative stability even though containing α-linolenic acid in a large amount, has suppressed degradation odor and unpleasant odor at the time of cooking, and is capable of providing a cooked food excellent in taste and flavor.

The content of the fat or oil as the component (A) of the present invention is preferably from 95 to 99.95 mass% (hereinafter simply referred to as "%"), more preferably from 97 to 99%, in the fat or oil composition, from the viewpoint of the use thereof.

In the constituent fatty acids of the fat or oil as the component (A) to be used in the present invention, the content of α-linolenic acid is 15% or more and 60% or less, that is, from 15% to 60%, and is preferably 17% or more, more preferably 20% or more, from the viewpoint of physiological effects. Further, the content of α-linolenic acid is preferably 55% or less, more preferably 50% or less, more preferably 45% or less, more preferably 40% or less, even more preferably 30% or less, from the viewpoint of oxidative stability. The content of α-linolenic acid in the constituent fatty acids of the fat or oil as the component (A) is preferably from 15 to 55%, more preferably from 15 to 50%, more preferably from 17 to 45%, more preferably from 17 to 40%, even more preferably from 20 to 30%, from the viewpoints of both of physiological effects and oxidative stability. It should be noted that the amount of a fatty acid herein refers to an amount obtained by converting it to a free fatty acid.

The constituent fatty acids of the fat or oil as the component (A) other than α-linolenic acid are not particularly limited and may be any of saturated fatty acids and unsaturated fatty acids. The content of the unsaturated fatty acids in the constituent fatty acids of the fat or oil other than α-linolenic acid is preferably from 60 to 100%, more preferably from 70 to 100%, more preferably from 75 to 100%, even more preferably from 80 to 98%, from the viewpoints of appearance and the industrial productivity of the fat or oil. The carbon number of the unsaturated fatty acids is preferably from 14 to 24, more preferably from 16 to 22, from the viewpoint of physiological effects.

In addition, the content of the saturated fatty acids in the constituent fatty acids of the fat or oil as the component (A) is preferably 40% or less, more preferably 30% or less, more 25% or less, even more preferably 20% or less, from the viewpoints of appearance and physiological effects. Further, the content is preferably 0.5% or more, from the viewpoint of the industrial productivity of the fat or oil. The carbon numbers of the saturated fatty acids are preferably from 14 to 24, more preferably from 16 to 22.

In the present invention, substances constituting the fat or oil as the component (A) contain monoacylglycerols and diacylglycerols as well as triacylglycerols. That is, the fat or oil as the component (A) in the present invention contains any one or more of monoacylglycerols, diacylglycerols, and triacylglycerols.

The content of the triacylglycerols in the fat or oil as the component (A) is preferably from 78 to 100%, more preferably from 88 to 100%, more preferably from 90 to 99.5%, even more preferably from 92 to 99%, from the viewpoint of the industrial productivity of the fat or oil.

Further, the content of the diacylglycerols in the fat or oil as the component (A) is preferably 19% or less, more preferably 9% or less, more preferably from 0.1 to 7%, even more preferably from 0.2 to 5%, from the viewpoint of the industrial productivity of the fat or oil. Moreover, the content of the monoacylglycerols in the fat or oil as the component (A) is preferably 3% or less, more preferably from 0 to 2%, from the viewpoint of improvement of taste and flavor.

In addition, the content of a free fatty acid or a salt thereof contained in the fat or oil composition of the present invention is preferably 5% or less, more preferably from 0 to 2%, even more preferably from 0 to 1%, from the viewpoints of the taste and flavor and the industrial productivity of the fat or oil.

An edible fat or oil that may be used as an origin of the fat or oil as the component (A) of the present invention is not particularly limited, and examples thereof may include the following fats or oils: plant-derived fats or oils such as soybean oil, rapeseed oil, safflower oil, rice oil, corn oil, palm oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao fat, sal fat, shea fat, and algae oil; animal-derived fats or oils such as fish oil, lard, beef tallow, and butter fat; or transesterified oils, hydrogenated oils, and fractionated oils thereof, or the like. The oils may each be used singly or may be mixed appropriately before use. Of those, from the viewpoint of usability, a plant-derived fat or oil is preferably used, a liquid fat or oil excellent in low-temperature resistance is more preferably used, and one or two or more selected from the group consisting of Japanese basil oil, linseed oil, and perilla oil are even more preferably used because the oils are rich in α-linolenic acid. It should be noted that the liquid fat or oil means a fat or oil that stays liquid at 20°C, when determined in accordance with a cold test described in Standard Method for the Analysis of Fats, Oils and Related Materials 2.3.8-27. In addition, the edible fat or oil is preferably a refined fat or oil obtained by a refinement step.

The rosemary extract as the component (B) to be used in the present invention refers to an extract of rosemary (Japanese name: Mannenrou) belonging to the genus *Rosmarinus* of the family *Lamiaceae* (R*osmarinus officinalis L.*). The variety of the rosemary includes Brenenden Blue, Creeping, Marine Blue, Majolica pink, Tuscan Blue, and Rex, or the like. In the present invention, all of them may be used.

The part of the rosemary to be used for obtaining the rosemary extract as the component (B) includes leaf, stem, germ, flower, branch, root, and seed, or the like, as well as a mixture thereof. The parts may be subjected to an extraction step without additional treatment, or may be subjected thereto after pulverization, cutting, or drying.

As extraction means for obtaining an extract, there may be used any means such as solid-liquid extraction, liquid-liquid extraction, immersion, decoction, leaching, steam distillation, reflux extraction, sonication extraction, microwave extraction, or stirring.

A solvent for extraction includes: water; water vapor; an alcohol such as methanol or ethanol; subcritical or supercritical carbon dioxide; an edible fat or oil such as soybean oil, rapeseed oil, sunflower oil, palm oil, or lard; and a mixture thereof.

In addition, as the rosemary extract as the component (B), there may be used a commercially available product, preferably a commercially available antioxidant, more preferably a commercially available antioxidant for foods and beverages.

The rosemary extract as the component (B) may be a crude purified product as long as the extract meets a standard acceptable for food use and exerts the effect according to the present invention. The resultant crude purified product may further be purified by using known separation and purification methods in combination. As purification means, there are given, for example, precipitation with an organic solvent, centrifugation, ultrafiltration, treatment with an adsorbent, high-performance liquid chromatography, and column chromatography.

The content of the rosemary extract as the component (B) in the fat or oil composition is 0.001% or more and 0.18% or less, that is, from 0.001 to 0.18%, and is preferably 0.002% or more, more preferably 0.004% or more, more preferably 0.008% or more, more preferably 0.016% or more, even more preferably 0.04% or more, from the viewpoint of oxidative stability. In addition, the content of the component (B) rosemary extract in the fat or oil composition is preferably 0.16% or less, more preferably 0.14% or less, even more preferably 0.1% or less, from the viewpoint of taste and flavor. The content of the rosemary extract as the component (B) in the fat or oil composition is preferably from 0.002 to 0.18%, more preferably from 0.004 to 0.16%, more preferably from 0.008 to 0.14%, more preferably from 0.016 to 0.1%, even more preferably from 0.04 to 0.1%, from the viewpoints of both of oxidative stability and taste and flavor.

In the case where the content of α-linolenic acid in the constituent fatty acids of the fat or oil as the component (A) is 30% or more, the content of the rosemary extract as the component (B) in the fat or oil composition is preferably from 0.016 to 0.1%.

Further, in the case where the content of α-linolenic acid in the constituent fatty acids of the fat or oil as the component (A) is 40% ormore, the content of the rosemary extract as the component (B) in the fat or oil composition is preferably from 0.04 to 0.1%.

The ratio of the content of α-linolenic acid in the constituent fatty acids of the fat or oil as the component (A) to the content of the rosemary extract as the component (B) in the fat or oil composition, [C18:3/(B)], is preferably 25, 000 or less, more preferably 10,000 or less, more preferably 7, 500 or less, even more preferably 5, 000 or less, from the viewpoint of oxidative stability, and is preferably 50 or more, more preferably 100 or more, more preferably 200 or more, even more preferably 300 or more, from the viewpoint of taste and flavor. The ratio of the content of α-linolenic acid in the constituent fatty acids of the fat or oil as the component (A) to the content of the rosemary extract as the component (B) in the fat or oil composition, [C18:3/(B)], is preferably from 50 to 25, 000, more preferably from 100 to 10, 000, more preferably from 200 to 7,500, even more preferably from 300 to 5, 000, from the viewpoints of both of oxidative stability and taste and flavor.

The dill extract as the component (C) to be used in the present invention refers to an extract of dill belonging to the genus *Anethum* (*Anethum graveolens L.*)*.*

The part of the dill to be used for obtaining the dill extract as the component (C) includes leaf, stem, germ, flower, branch, root, fruit, and seed, or the like, as well as a mixture thereof. The parts may be subjected to an extraction step without additional treatment, or may be subjected thereto after pulverization, cutting, or drying.

An extraction means for obtaining the dill extract as the component (C), a purification method for a solvent for extraction, and the like are the same as those of the rosemary extract as the component (B).

In addition, as the dill extract as the component (C), there may be used a commercially available product, preferably a commercially available product for food use.

The content of the dill extract as the component (C) in the fat or oil composition is preferably 0.00002% or more, more preferably 0.00004% or more, more preferably 0.0001% or more, even more preferably 0.0002% or more, from the viewpoint of suppression of odor derived from the rosemary extract. In addition, the content of the dill extract as the component (C) in the fat or oil composition is preferably 0.05% or less, more preferably 0.02% or less, even more preferably 0.01% or less, from the viewpoint of taste and flavor. The content of the dill extract as the component (C) in the fat or oil composition is preferably from 0.00002 to 0.05%, more preferably from 0.00004 to 0.02%, even more preferably from 0.0001 to 0.01%, from the viewpoints of both of suppression of odor derived from rosemary extract and taste and flavor.

In the case where the content of α-linolenic acid in the constituent fatty acids of the fat or oil as the component (A) is 30% or more, the content of the dill extract as the component (C) in the fat or oil composition is preferably from 0.0002 to 0.05%. Further, in the case where the content of α-linolenic acid in the constituent fatty acids of the fat or oil as the component (A) is 40% or more, the content of the dill extract as the component (C) in the fat or oil composition is preferably from 0.0005 to 0.05%.

It should be noted that in the present invention, the rosemary extract as the component (B) and the dill extract as the component (C) may have a purity of about 100% or may be diluted with the solvent used for extraction. The content of the rosemary extract as the component (B) or the dill extract as the component (C) is determined based on the mass of a pure substance containing no solvent.

In the fat or oil composition of the present invention, the mass ratio of the content of the component (B) to the content of the component (C), [(B)/(C)], is 2 or more and 200 or less, that is, from 2 to 200, and is preferably 4 or more, more preferably 10 or more, more preferably 16 or more, even more preferably 40 or more, from the viewpoints of suppression of odor derived from the dill extract as the component (C) and taste and flavor. In addition, the mass ratio of the content of the component (B) to the content of the component (C), [(B)/(C)], is preferably 150 or less, more preferably 100 or less, from the viewpoint of suppression of odor derived from the rosemary extract as the component (B). The mass ratio of the content of the component (B) to the content of the component (C), [(B)/(C)], is preferably from 4 to 200, more preferably from 10 to 150, more preferably from 16 to 100, even more preferably from 40 to 100, from the viewpoints of suppression of odor derived from the dill extract as the component (C), taste and flavor, and suppression of odor derived from the rosemary extract as the component (B).

In addition, the fat or oil composition of the present invention preferably contains an antioxidant other than the component (B) and the component (C) in the fat or oil composition at from 0.01 to 2%, more preferably from 0.02 to 0.1%, from the viewpoint of oxidative stability at the time of each of preservation and cooking. Examples of the antioxidant include a natural antioxidant, a tocopherol, and an ascorbic acid ester, or the like. Of those, one or two or more of antioxidants selected from the group consisting of a natural antioxidant, a tocopherol, and ascorbyl palmitate are preferably used, and a combination of ascorbyl palmitate and a tocopherol is more preferably used.

The fat or oil composition of the present invention can be obtained by, for example, adding the component (B), the component (C), and if necessary, the other components to the fat or oil as the component (A) and optionally, for example, heating and stirring the resultant mixture.

Such fat or oil composition can be used in the same manner as a general edible fat or oil, and can be widely applied to a variety of foods and beverages including the fat or oil. In particular, the fat or oil composition is used suitably as a fat or oil for cooking, more suitably as a fat or oil for cooking of a deep-fried food such as fry or tempura, a sauteed food, or a grilled food.

In relation to the above-mentioned embodiment, the present invention discloses the following fat or oil compositions or uses.
<1> A fat or oil composition, comprising the following components (A), (B), and (C):
   (A) a fat or oil comprising constituent fatty acids comprising 15 mass% or more and 60 mass% or less, that is, from 15 to 60 mass% of α-linolenic acid;
   (B) 0.001 mass% or more and 0.18 mass% or less, that is, from 0.001 to 0.18 mass% of a rosemary extract; and
   (C) a dill extract,
   in which the mass ratio of the content of the component (B) to the content of the component (C), [(B)/(C)], is 2 or more and 200 or less, that is, from 2 to 200.
<2> The fat or oil composition according to the above-mentioned item <1>, in which the content of α-linolenic acid in the constituent fatty acids of the fat or oil as the component (A) is preferably 17 mass% or more, more preferably 20 mass% or more.
<3> The fat or oil composition according to the above-mentioned item <1> or <2>, in which the content of α-linolenic acid in the constituent fatty acids of the fat or oil as the component (A) is preferably 55 mass% or less, more preferably 50 mass% or less, more preferably 45 mass% or less, more preferably 40 mass% or less, even more preferably 30 mass% or less.
<4> The fat or oil composition according to the above-mentioned item <1>, in which the content of α-linolenic acid in the constituent fatty acids of the fat or oil as the component (A) is preferably from 15 to 55 mass%, more preferably from 15 to 50 mass%, more preferably from 17 to 45 mass%, more preferably from 17 to 40 mass%, even more preferably from 20 to 30 mass%.
<5> The fat or oil composition according to any one of the above-mentioned items <1> to <4>, in which the component (A) preferably comprises one or two or more of fats or oils selected from the group consisting of linseed oil, Japanese basil oil, and perilla oil.
<6> The fat or oil composition according to any one of the above-mentioned items <1> to <5>, in which the content of the rosemary extract as the component (B) is preferably 0.002 mass% or more, more preferably 0.004 mass% or more, more preferably 0.008 mass% or more, even more preferably 0.016 mass% or more.
<7> The fat or oil composition according to any one of the above-mentioned items <1> to <6>, in which the content of the rosemary extract as the component (B) is preferably 0.16 mass% or less, more preferably 0.14 mass% or less, even more preferably 0.1 mass% or less.
<8> The fat or oil composition according to any one of the above-mentioned items <1> to <5>, in which the content of the rosemary extract as the component (B) is preferably from 0.002 to 0.18 mass%, more preferably from 0.004 to 0.16 mass%, more preferably from 0.008 to 0.14 mass%, even more preferably from 0.016 to 0.1 mass%.
<9> The fat or oil composition according to any one of the above-mentioned items <1> to <8>, in which the ratio of the content of α-linolenic acid in the constituent fatty acids of the fat or oil as the component (A) to the content of the rosemary extract as the component (B) in the fat or oil composition, [C18:3/(B)], is preferably 50 or more, more preferably 100 or more, more preferably 200 or more, even more preferably 300 or more.
<10> The fat or oil composition according to any one of the above-mentioned items <1> to <9>, in which the ratio of the content of α-linolenic acid in the constituent fatty acids of the fat or oil as the component (A) to the content of the rosemary extract as the component (B) in the fat or oil composition, [C18:3/(B)], is preferably 25,000 or less, more preferably 10,000 or less, more preferably 7,500 or less, even more preferably 5,000 or less.
<11> The fat or oil composition according to any one of the above-mentioned items <1> to <8>, in which the ratio of the content of α-linolenic acid in the constituent fatty acids of the fat or oil as the component (A) to the content of the rosemary extract as the component (B) in the fat or oil composition, [C18:3/(B)], is preferably from 50 to 25, 000, more preferably from 100 to 10, 000, more preferably from 200 to 7,500, even more preferably from 300 to 5,000.
<12> The fat or oil composition according to any one of the above-mentioned items <1> to <11>, in which the content of the dill extract as the component (C) is preferably 0.00002 mass% or more, more preferably 0.00004 mass% or more, more preferably 0.0001 mass% or more, even more preferably 0.0002 mass% or more.
<13> The fat or oil composition according to any one of the above-mentioned items <1> to <12>, in which the content of the dill extract as the component (C) is preferably 0.05 mass% or less, more preferably 0.02 mass% or less, more preferably 0.01 mass% or less, even more preferably 0.004 mass% or less.
<14> The fat or oil composition according to any one of the above-mentioned items <1> to <11>, in which the content of the dill extract as the component (C) is preferably from 0.00002 to 0.05 mass%, more preferably from 0.00004 to 0.02 mass%, more preferably from 0.0001 to 0.01 mass%, even more preferably from 0.0002 to 0.004 mass%.
<15> The fat or oil composition according to any one of the above-mentioned items <1> to <14>, in which the ratio of the content of the component (B) to the content of the component (C), [(B)/(C)], is preferably 4 or more, more preferably 10 or more, more preferably 16 or more, even more preferably 40 or more.
<16> The fat or oil composition according to any one of the above-mentioned items <1> to <15>, in which the ratio of the content of the component (B) to the content of the component (C), [(B)/(C)], is preferably 150 or less, more preferably 100 or less.
<17> The fat or oil composition according to any one of the above-mentioned items <1> to <14>, in which the ratio of the content of the component (B) to the content of the component (C), [(B)/(C)], is preferably from 4 to 200, more preferably from 10 to 150, more preferably from 16 to 100, even more preferably from 40 to 100.
<18> The fat or oil composition according to any one of the above-mentioned items <1> to <17>, comprising preferably from 95 to 99.95 mass%, more preferably from 97 to 99 mass% of the fat or oil as the component (A).
<19> The fat or oil composition according to any one of the above-mentioned items <1> to <18>, in which the content of triacylglycerols in the fat or oil as the component (A) is preferably from 78 to 100 mass%, more preferably from 88 to 100 mass%, more preferably from 90 to 99.5 mass%, even more preferably from 92 to 99 mass%.
<20> The fat or oil composition according to any one of the above-mentioned items <1> to <19>, in which the content of unsaturated fatty acids in the constituent fatty acids of the fat or oil as the component (A) other than α-linolenic acid is preferably from 60 to 100 mass%, more preferably from 70 to 100 mass%, more preferably from 75 to 100 mass%, even more preferably from 80 to 98 mass%.
<21> The fat or oil composition according to any one of the above-mentioned items <1> to <20>, further comprising preferably one or two or more selected from the group consisting of a natural antioxidant, a tocopherol, and an ascorbic acid ester, more preferably one or two or more selected from the group consisting of a natural antioxidant, a tocopherol, and ascorbyl palmitate, even more preferably ascorbyl palmitate and a tocopherol.
<22> The fat or oil composition according to the above-mentioned item <21>, in which the content of the antioxidant is preferably from 0.01 to 0.2 mass%, more preferably from 0.02 to 0.1 mass%.
<23> The fat or oil composition according to any one of the above-mentioned items <1> to <22>, in which the rosemary extract as the component (B) is preferably an extract obtained from one part or two or more parts selected from the group consisting of leaf, stem, germ, flower, branch, root, and seed of rosemary.
<24> The fat or oil composition according to any one of the above-mentioned items <1> to <23>, in which the rosemary extract as the component (B) is preferably one extracted with one or two or more of solvents selected from the group consisting of water, water vapor, an alcohol, subcritical or supercritical carbon dioxide, and an edible fat or oil.
<25> The fat or oil composition according to the above-mentioned item <24>, in which the alcohol is preferably one or two selected from the group consisting of methanol and ethanol, and the edible fat or oil is one or two or more selected from the group consisting of soybean oil, rapeseed oil, sunflower oil, palm oil, and lard.
<26> The fat or oil composition according to any one of the above-mentioned items <1> to <25>, in which the dill extract as the component (C) is preferably an extract obtained from one part or two or more parts selected from the group consisting of leaf, stem, germ, flower, branch, root, fruit, and seed of dill.
<27> The fat or oil composition according to any one of the above-mentioned items <1> to <26>, in which the dill extract as the component (C) is preferably one extracted with one or two or more of solvents selected from the group consisting of water, water vapor, an alcohol, subcritical or supercritical carbon dioxide, and an edible fat or oil.
<28> The fat or oil composition according to the above-mentioned item <27>, in which the alcohol is preferably one or two selected from the group consisting of methanol and ethanol, and the edible fat or oil is one or two or more selected from the group consisting of soybean oil, rapeseed oil, sunflower oil, palm oil, and lard.
<29> The fat or oil composition according to any one of the above-mentioned items <1> to <28>, in which the rosemary extract as the component (B) is preferably a commercially available product, more preferably a commercially available antioxidant, even more preferably a commercially available antioxidant for foods and beverages.
<30> The fat or oil composition according to any one of the above-mentioned items <1> to <29>, in which the dill extract as the component (C) is preferably a commercially available product, more preferably a commercially available product for foods.
<31> Use of the fat or oil composition according to any one of the above-mentioned items <1> to <30> as an edible fat or oil.
<32> The use according to the above-mentioned item <31> as a fat or oil for cooking.
<33> The use according to the above-mentioned item <31> as a fat or oil for cooking of a deep-fried food, a sauteed food, or a grilled food.

### Examples

### (Analysis methods)

### (i) Composition of glycerides in fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC).

### <GLC analysis conditions>

### (Conditions)

Apparatus: Agilent 6890 Series (manufactured by Agilent Technologies)
Integrator: ChemStation B.02.01 SR2 (manufactured by Agilent Technologies)
Column: DB-1ht (manufactured by Agilent J&W)
Carrier gas: 1.0 mL He/min
Injector: Split (1:50), T=320°C
Detector: FID, T=350°C
Oven temperature: The temperature was raised from 80°C at 10°C/min to 340°C, and kept for 15 minutes.

### (ii) Composition of constituent fatty acids in fat or oil

Fatty acid methyl esters were prepared in accordance with "Preparation method for fatty acid methyl ester (2.4.1.-1996)" described in "Standard Method for the Analysis of Fats, Oils and Related Materials" edited by Japan Oil Chemists' Society, and the resultant fat or oil samples were subjected to measurement in accordance with American Oil Chemists. Society Official Method Ce 1f-96 (GLC method).

### <GLC analysis conditions>

Column: CP-SIL88 100 m×0.25 mm×0.2 µm (VARIAN)
Carrier gas: 1.0 mL He/min
Injector: Split (1:200), T=250°C
Detector: FID, T=250°C
Oven temperature: The temperature was kept at 174°C for 50 minutes, raised to 220°C at 5°C/min, and kept for 25 minutes.

### (Raw materials)

Fats or oils a and b (fat or oil a: refined linseed oil (manufactured by SUMMIT OIL MILL CO., LTD.) and fat or oil b: rapeseed salad oil (manufactured by The Nisshin OilliO Group, Ltd.)) having the compositions shown in Table 1 were each used as the fat or oil as the component (A).

Preparations (RME-1 to RME-5, PE-1 to PE-3) shown in Table 2 were each used as the rosemary extract as the component (B) and the dill extract as the component (C).

**[Table 1]**

| | Fatty acid composition (mass%) | | | | | | | | | | Glyceride composition (mass%) | | | |
|---|---|---|---|---|---|---|---|---|---|---|---|---|---|---|
| | C16:0 | C16:1 | C18:0 | C18:1 | C18:2 | C18:3 | C20:0 | C20:1 | C22:0 | C22: 1 | FFA | MAG | DAG | TAG |
| Fat or oil a | 5.06 | 0.06 | 3.31 | 19.52 | 15.96 | 54.63 | 0.13 | 0.78 | 0.12 | 0.07 | 0.03 | 0.00 | 2.63 | 97.35 |
| Fat or oil b | 4.05 | 0.21 | 1.75 | 61.50 | 19.79 | 10.18 | 0.60 | 1.15 | 0.23 | 0.05 | 0.03 | 0.00 | 1.58 | 98.40 |

| | | | | | | | | | | | | | | |
|---|---|---|---|---|---|---|---|---|---|---|---|---|---|---|
| MAG: Monoacylglycerol DAG: Diacylglycerol TAG: Triacylglycerol FFA: Free fatty acid | | | | | | | | | | | | | | |

**[Table 2]**

| | Abbreviated name | Company name | Name | Content of extract in preparation [mass%] |
|---|---|---|---|---|
| Rosemary extract | RME-1 | KALSEC | Herbalox HT-O | 40 |
| | RME-2 | Mitsubishi-Kagaku Foods Corporation | RM Keeper OS | 20 |
| | RME-3 | T. HASEGAWA CO., LTD. | Seasoning Oil TH-RA-2 | 7.7 |
| | RME-4 | Ogawa & Co., Ltd. | Spice OG Rosemary | 10 |
| | RME-5 | EIKODO | Rosemary Oil 23049 | 100 |
| Dill extract | PE-1 | Ogawa & Co., Ltd. | Spice OG Dill | 10 |
| | PE-2 | EIKODO | Dill Seed Oil 01030 | 100 |
| | PE-3 | T. HASEGAWA CO., LTD. | Dill Flavor FH-3911 | 3.0 |

### Examples 1 to 8 and Comparative Examples 1 to 8 (Preparation of fat or oil compositions)

The fat or oil a, fat or oil b, rosemary extract (RME-1), dill extract (PE-1), and mixed tocopherols (manufactured by Archer Daniels Midland) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, the contents of the dill extract, and the contents of the mixed tocopherols in the fat or oil compositions are as shown in Table 3. It should be noted that the blending amounts of the rosemary extract and dill extract in the preparations were determined from the contents of the extracts in the preparations shown in Table 2 so as to achieve the contents shown in Table 3.

### (Evaluation of oxidative stability)

The fat or oil compositions shown in Table 3 were used to evaluate oxidative stability. The oxidative stability was evaluated in accordance with "CDM test (2.5.1.2-1996)" described in "Standard Method for the Analysis of Fats, Oils and Related Materials" edited by Japan Oil Chemists' Society by calculating induction time (hr), and the results were each represented as an oxidative stability index (OSI). Table 3 shows the results.

### (Thin film heating test)

The fat or oil compositions shown in Table 3 were subjected to a thin film heating test. In the thin film heating test, 3 g of each of the fat or oil compositions were added to a stainless-steel petri dish with a diameter of 6 cm and placed on a hot plate heated to 150°C, and 10 minutes later, "degradation odor due to oxidation" was evaluated. Nine panelists evaluated their "degradation odor due to oxidation" in accordance with the following criteria, and mean values thereof were determined as scores. Table 3 shows the results.

### (Degradation odor due to oxidation)

5: Not sensed
4: Almost not sensed
3: Slightly sensed
2: Sensed
1: Clearly sensed

**[Table 3]**

| | Example | | | | | | | | Comparative Example | | | | | | | |
|---|---|---|---|---|---|---|---|---|---|---|---|---|---|---|---|---|
| | 1 | 2 | 3 | 4 | 5 | 6 | 7 | 8 | 1 | 2 | 3 | 4 | 5 | 6 | 7 | 8 |
| Fat or oil a | 13.4 | 13.4 | 13.4 | 24.7 | 24.7 | 24.7 | 47.2 | 69.8 | 13.4 | 24.7 | 24.7 | 47.2 | 47.2 | 69.8 | 69.8 | 24.7 |
| Fat or oil b | 86.6 | 86.6 | 86.6 | 75.3 | 75.3 | 75.3 | 52.8 | 30.2 | 86.6 | 75.3 | 75.3 | 52.8 | 52.8 | 30.2 | 30.2 | 75.3 |
| (A) Ratio in fat or oil [mass%] | | | | | | | | | | | | | | | | |
| C18:3 | 15 | 15 | 15 | 20 | 20 | 20 | 30 | 40 | 15 | 20 | 20 | 30 | 30 | 40 | 40 | 20 |
| (B) RME-1 [mass ppm] | 40 | 160 | 400 | 160 | 400 | 1000 | 1000 | 1000 | 0 | 0 | 0 | 0 | 10 | 0 | 10 | 0 |
| (C) PE-1 [mass ppm] | 10 | 10 | 10 | 10 | 10 | 10 | 10 | 10 | 10 | 0 | 10 | 10 | 10 | 10 | 10 | 10 |
| (B)/(C) | 4 | 16 | 40 | 16 | 40 | 100 | 100 | 100 | 0 | - | 0 | 0 | 1 | 0 | 1 | 0 |
| C18:3/(B) | 3750 | 938 | 375 | 1250 | 500 | 200 | 300 | 400 | - | - | - | - | 30000 | - | 40000 | - |
| Mixed tocopherols [mass ppm] | 0 | 0 | 0 | 0 | 0 | 0 | 0 | 0 | 0 | 0 | 0 | 0 | 0 | 0 | 0 | 1000 |
| | | | | | | | | | | | | | | | | |
| OSI | 3.41 | 3.80 | 4.46 | 3.14 | 3.68 | 4.70 | 3.76 | 3.49 | 3.10 | 2.58 | 2.62 | 1.83 | 1.90 | 1.38 | 1.50 | 2.95 |
| Degradation odor due to oxidation | 4 | 5 | 5 | 5 | 5 | 5 | 5 | 5 | 3 | 2 | 2 | 1 | 1 | 1 | 1 | 3 |

As is apparent from the results shown in Table 3, it found that the fat or oil compositions of the present invention have high oxidative stability and have suppressed degradation odor at the time of heating as well.

### Examples 9 to 46 and Comparative Examples 9 to 22 (Preparation of fat or oil compositions)

The fat or oil a, fat or oil b, rosemary extracts (RME-1 to RME-5), and dill extracts (PE-1 to PE-3) were mixed to prepare fat or oil compositions, respectively. The contents of α-linolenic acid (C18:3) in constituent fatty acids of the fats or oils in the fat or oil compositions (total amount: 100 mass%), and the contents of the rosemary extracts, and the contents of the dill extracts in the fat or oil compositions are as shown in Tables 4 to 7. It should be noted that the blending amounts of the rosemary extract and dill extract in the preparations were determined from the contents of the extracts in the preparations shown in Table 2 so as to achieve the contents shown in Tables 4 to 7.

### (Thin film heating test)

The fat or oil compositions shown in Tables 4 to 7 were subjected to the thin film heating test in the same manner as above to evaluate the "degradation odor due to oxidation" . In addition, nine panelists evaluated their "odor derived from rosemary extract" and "odor derived from dill extract" by the thin film heating test in the same manner as above in accordance with the following criteria, and mean values thereof were determined as scores. Tables 4 to 7 show the results.

### (Odor derived from rosemary extract)

5: Not sensed
4: Almost not sensed
3: Slightly sensed
2: Sensed
1: Clearly sensed
(Odor derived from dill extract)
5: Not sensed
4: Almost not sensed
3: Slightly sensed
2: Sensed
1: Clearly sensed

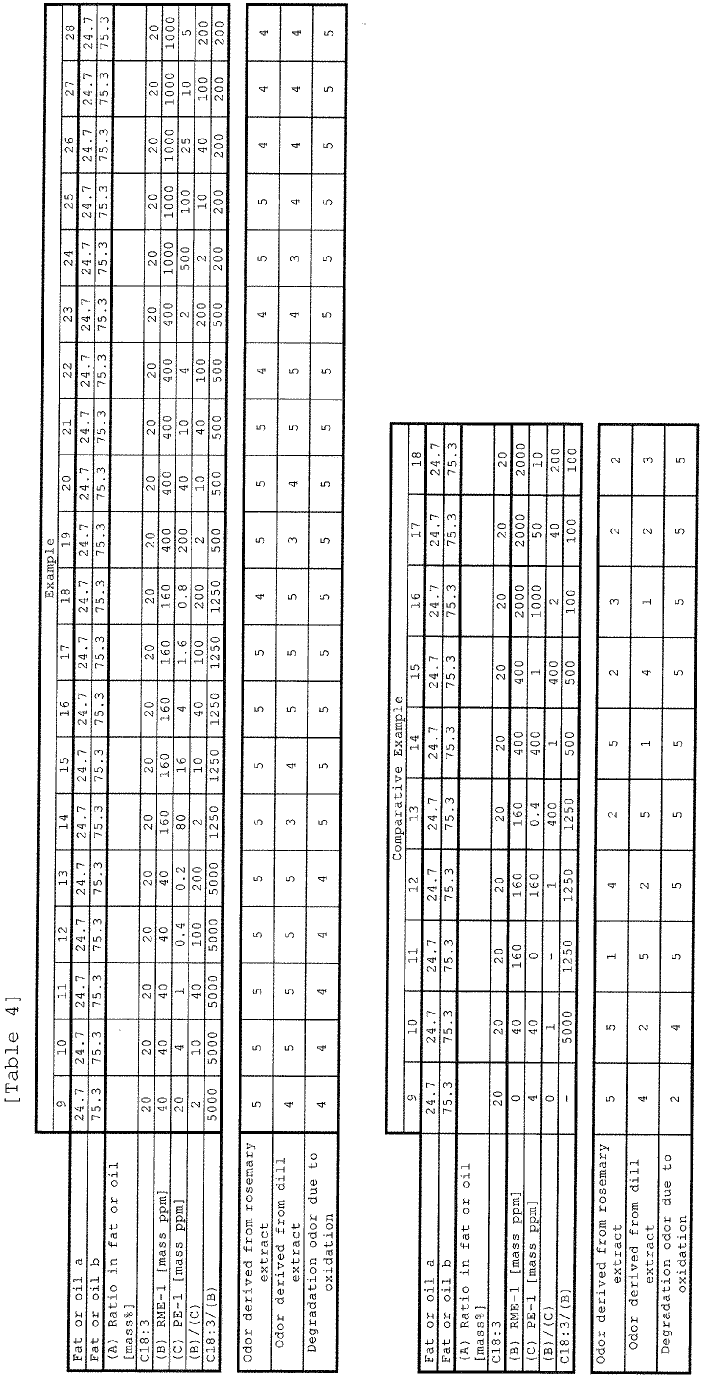

**[Table 5]**

| | Example | | | | | | | | | | | |
|---|---|---|---|---|---|---|---|---|---|---|---|---|
| | 29 | 30 | 31 | 32 | 33 | 34 | 35 | 36 | 37 | 38 | 39 | 40 |
| Fat or oil a | 13.4 | 13.4 | 13.4 | 13.4 | 47.2 | 47.2 | 47.2 | 47.2 | 69.8 | 69.8 | 69.8 | 69.8 |
| Fat or oil b | 86.6 | 86.6 | 86.6 | 86.6 | 52.8 | 52.8 | 52.8 | 52.8 | 30.2 | 30.2 | 30.2 | 30.2 |
| (A) Ratio in fat or oil [mass%] | | | | | | | | | | | | |
| C18:3 | 15 | 15 | 15 | 15 | 30 | 30 | 30 | 30 | 40 | 40 | 40 | 40 |
| (B) RME-1 [mass ppm] | 40 | 160 | 400 | 1000 | 40 | 160 | 400 | 1000 | 40 | 160 | 400 | 1000 |
| (C) PE-1 [mass ppm] | 1 | 4 | 10 | 25 | 1 | 4 | 10 | 25 | 1 | 4 | 10 | 25 |
| (B)/(C) | 40 | 40 | 40 | 40 | 40 | 40 | 40 | 40 | 40 | 40 | 40 | 40 |
| C18:3/(B) | 3750 | 937.5 | 375 | 150 | 7500 | 1875 | 750 | 300 | 10000 | 2500 | 1000 | 400 |
| | | | | | | | | | | | | |
| Odor derived from rosemary extract | 5 | 5 | 5 | 5 | 5 | 5 | 5 | 5 | 5 | 5 | 5 | 5 |
| Odor derived from dill extract | 5 | 5 | 4 | 4 | 5 | 5 | 4 | 4 | 5 | 5 | 4 | 4 |
| Degradation odor due to oxidation | 5 | 5 | 5 | 5 | 3 | 4 | 4 | 5 | 3 | 3 | 4 | 5 |

**[Table 6]**

| | Example | | | | Comparative Example | | | |
|---|---|---|---|---|---|---|---|---|
| | 41 | 42 | 43 | 44 | 19 | 20 | 21 | 22 |
| Fat or oil a | 24.7 | 24.7 | 24.7 | 24.7 | 24.7 | 24.7 | 24.7 | 24.7 |
| Fat or oil b | 75.3 | 75.3 | 75.3 | 75.3 | 75.3 | 75.3 | 75.3 | 75.3 |
| (A) Ratio in fat or oil [mass%] | | | | | | | | |
| C18:3 | 20 | 20 | 20 | 20 | 20 | 20 | 20 | 20 |
| (B) RME-2 [mass ppm] | 160 | - | - | - | 160 | - | | |
| (B) RME-3 [mass ppm] | - | 160 | - | - | - | 160 | - | - |
| (B) RME-4 [mass ppm] | - | - | 160 | - | - | - | 160 | - |
| (B) RME-5 [mass ppm] | - | - | - | 160 | - | - | - | 160 |
| (C) PE-1 [mass ppm] | 4 | 4 | 4 | 4 | 0 | 0 | 0 | 0 |
| (B)/(C) | 40 | 40 | 40 | 40 | - | - | - | - |
| C18:3/(B) | 1250 | 1250 | 1250 | 1250 | 1250 | 1250 | 1250 | 1250 |
| | | | | | | | | |
| Odor derived from rosemary extract | 5 | 5 | 5 | 5 | 2 | 2 | 2 | 2 |
| Odor derived from dill extract | 4 | 4 | 3 | 4 | 5 | 5 | 5 | 5 |
| Degradation odor due to oxidation | 5 | 5 | 5 | 5 | 5 | 5 | 5 | 5 |

**[Table 7]**

| | Example | |
|---|---|---|
| | 45 | 46 |
| Fat or oil a | 24.7 | 24.7 |
| Fat or oil b | 75.3 | 75.3 |
| (A) Ratio in fat or oil [mass%] | | |
| C18:3 | 20 | 20 |
| (B) RME-1 [mass ppm] | 160 | 160 |
| (C) Each PE [mass ppm] | 4 | 4 |
| (C) Kind of PE | PE-2 | PE-3 |
| (B)/(C) | 40 | 40 |
| C18:3/(B) | 1250 | 1250 |
| | | |
| Odor derived from rosemary extract | 5 | 5 |
| Odor derived from dill extract | 4 | 4 |
| Degradation odor due to oxidation | 5 | 5 |

As is apparent from the results shown in Tables 4 to 7, it found that the fat or oil compositions of the present invention have less unpleasant odor peculiar to the rosemary extract and suppressed degradation odor due to oxidation of the fat or oil at the time of cooking as well. In addition, the odor derived from the dill extract was also hardly sensed.

Examples 47 to 52 and Comparative Examples 17 and 23 to 25

### (Preparation of fat or oil compositions)

The fat or oil a, fat or oil b, rosemary extract (RME-1), and dill extract (PE-1) were mixed to prepare fat or oil compositions, respectively. The contents of α-linolenic acid (C18:3) in constituent fatty acids of the fats or oils in the fat or oil compositions (total amount: 100 mass%), and the contents of the rosemary extract, and the contents of the dill extract in the fat or oil compositions are as shown in Tables 8.

### (Evaluation by cooking of scrambled eggs)

13 g of each of the fat or oil compositions shown in Table 8, 50 g of egg liquid, and 0.5 g of salt were used to prepare scrambled eggs. Nine panelists evaluated the scrambled eggs in accordance with the criteria for the "degradation odor due to oxidation", "odor derived from rosemary extract", and "odor derived from dill extract", and mean values thereof were determined as scores. Table 8 shows the results.

**[Table 8]**

| | Example | | | | | | Comparative Example | | | |
|---|---|---|---|---|---|---|---|---|---|---|
| | 47 | 48 | 49 | 50 | 51 | 52 | 23 | 17 | 24 | 25 |
| Fat or oil a | 24.7 | 24.7 | 24.7 | 24.7 | 13.4 | 47.2 | 24.7 | 24.7 | 24.7 | 24.7 |
| Fat or oil a | 75.3 | 75.3 | 75.3 | 75.3 | 86.6 | 52.8 | 75.3 | 75.3 | 75.3 | 75.3 |
| (A) Ratio in fat or oil [mass%] | | | | | | | | | | |
| C18:3 | 20 | 20 | 20 | 20 | 15 | 30 | 20 | 20 | 20 | 20 |
| (B) RME-1 [mass ppm] | 40 | 160 | 160 | 400 | 160 | 160 | 160 | 2000 | 0 | 160 |
| (C) PE-1 [mass ppm] | 1 | 80 | 4 | 10 | 4 | 4 | 0.4 | 50 | 0 | 0 |
| (B)/(C) | 40 | 2 | 40 | 40 | 40 | 40 | 400 | 40 | - | - |
| C18:3/(B) | 5000 | 1250 | 1250 | 500 | 938 | 1875 | 1250 | 100 | - | 1250 |
| | | | | | | | | | | |
| Odor derived from rosemary extract | 5 | 5 | 5 | 4 | 5 | 5 | 2 | 2 | 5 | 2 |
| Odor derived from dill extract | 5 | 3 | 5 | 5 | 5 | 5 | 3 | 2 | 2 | 5 |
| Degradation odor due to oxidation | 5 | 5 | 5 | 5 | 5 | 5 | 5 | 5 | 4 | 5 |

As is apparent from the results shown in Table 8, it found that the scrambled eggs cooked using the fat or oil compositions of the present invention have no degradation odor and no unpleasant odor derived from the rosemary extract and the dill extract, and have good taste and flavor.

## Claims

1. A fat or oil composition, comprising the following components (A), (B), and (C):
(A) a fat or oil comprising constituent fatty acids comprising from 15 to 60 mass% of α-linolenic acid;
(B) from 0.001 to 0.18 mass% of a rosemary extract; and
(C) a dill extract,
wherein a mass ratio of a content of the component (B) to a content of the component (C), [(B)/(C)], is from 2 to 200, wherein
the rosemary extract is obtainable by subjecting any one or more parts selected from the group consisting of leaf, stem, germ, flower, branch, root, and seed of rosemary to a step of extraction without additional treatment, or extraction after pulverization, cutting, or drying, using water, water vapor, an alcohol, subcritical or supercritical carbon dioxide, an edible fat or oil or a mixture thereof as extraction solvent, and
the dill extract is obtainable by subjecting any one or more parts selected from the group consisting of leaf, stem, germ, flower, branch, root, fruit, and seed of dill to a step of extraction without additional treatment, or extraction after pulverization, cutting, or drying, using water, water vapor, an alcohol, subcritical or supercritical carbon dioxide, an edible fat or oil or a mixture thereof as extraction solvent.

2. The fat or oil composition according to claim 1, wherein a content of α-linolenic acid in the constituent fatty acids of the fat or oil as the component (A) is from 15 to 50 mass%.

3. The fat or oil composition according to claim 1 or 2, wherein the component (A) comprises one or two or more of fats or oils selected from the group consisting of linseed oil, Japanese basil oil, and perilla oil.

4. The fat or oil composition according to any one of claims 1 to 3, wherein a content of the rosemary extract as the component (B) is from 0.008 to 0.14 mass%.

5. The fat or oil composition according to any one of claims 1 to 3, wherein a content of the rosemary extract as the component (B) is from 0.016 to 0.1 mass%.

6. The fat or oil composition according to any one of claims 1 to 5, wherein a ratio of a content of the α-linolenic acid in the constituent fatty acids of the fat or oil as the component (A) to a content of the rosemary extract as the component (B) in the fat or oil composition, [C18:3/(B)], is from 50 to 25,000.

7. The fat or oil composition according to any one of claims 1 to 5, wherein a ratio of a content of the α-linolenic acid in the constituent fatty acids of the fat or oil as the component (A) to a content of the rosemary extract as the component (B) in the fat or oil composition, [C18:3/(B)], is from 100 to 10,000.

8. The fat or oil composition according to any one of claims 1 to 5, wherein a ratio of a content of the α-linolenic acid in the constituent fatty acids of the fat or oil as the component (A) to a content of the rosemary extract as the component (B) in the fat or oil composition, [C18:3/(B)], is from 300 to 5,000.

9. The fat or oil composition according to any one of claims 1 to 8, wherein a content of the dill extract as the component (C) is from 0.00002 to 0.05 mass%.

10. The fat or oil composition according to any one of claims 1 to 8, wherein a content of the dill extract as the component (C) is from 0.0001 to 0.01 mass%.

11. The fat or oil composition according to any one of claims 1 to 10, wherein a mass ratio of a content of the rosemary extract as the component (B) to a content of the dill extract as the component (C), [(B)/(C)], is from 10 to 150.

12. The fat or oil composition according to any one of claims 1 to 10, wherein a mass ratio of a content of the rosemary extract as the component (B) to a content of the dill extract as the component (C), [(B)/(C)], is from 16 to 100.

13. The fat or oil composition according to any one of claims 1 to 10, wherein a mass ratio of a content of the rosemary extract as the component (B) to a content of the dill extract as the component (C), [(B)/(C)], is from 40 to 100.

14. The fat or oil composition according to any one of claims 1 to 13, comprising from 95 to 99.95 mass% of the fat or oil as the component (A).

15. The fat or oil composition according to any one of claims 1 to 14, wherein a content of triacylglycerols in the fat or oil as the component (A) is from 78 to 100 mass%.

## Patentansprüche

1. Fett- oder Ölzusammensetzung, umfassend die folgenden Komponenten (A), (B) und (C):
(A) ein Fett oder Öl umfassend Fettsäurebestandteile, die 15 bis 60 Massen-% α-Linolensäure umfassen;
(B) 0,001 bis 0,18 Massen-% eines Rosmarinextrakts; und
(C) ein Dillextrakt,
wobei ein Massenverhältnis eines Gehalts der Komponente (B) zu einem Gehalt der Komponente (C), [(B)/(C)], 2 bis 200 beträgt,
wobei
der Rosmarinextrakt erhältlich ist, indem mindestens einer oder mehrere Teile ausgewählt aus der Gruppe bestehend aus Blatt, Stamm, Keim, Blume, Zweig, Wurzel und Samen von Rosmarin einem Extraktionsschritt ohne zusätzliche Behandlung oder Extraktion nach Pulverisierung, Schneiden oder Trocknen, unter Verwendung von Wasser, Wasserdampf, einem Alkohol, unterkritischem oder überkritischem Kohlenstoffdioxid, einem essbaren Fett oder Öl oder einer Mischung davon als Extraktionslösungsmittel, unterzogen wird, und
der Dillextrakt erhältlich ist, indem mindestens einer oder mehrere Teile ausgewählt aus der Gruppe bestehend aus Blatt, Stamm, Keim, Blume, Zweig, Wurzel, Frucht und Samen von Dill einem Extraktionsschritt ohne zusätzliche Behandlung oder Extraktion nach Pulverisierung, Schneiden oder Trocknen, unter Verwendung von Wasser, Wasserdampf, einem Alkohol, unterkritischem oder überkritischem Kohlenstoffdioxid, einem essbaren Fett oder Öl oder einer Mischung davon als Extraktionslösungsmittel, unterzogen wird.

2. Fett- oder Ölzusammensetzung gemäß Anspruch 1, wobei ein Gehalt an α-Linolensäure in den Fettsäurebestandteilen des Fetts oder Öls als die Komponente (A) 15 bis 50 Massen-% beträgt.

3. Fett- oder Ölzusammensetzung gemäß Anspruch 1 oder 2, wobei die Komponente (A) ein oder zwei oder mehr Fette oder Öle ausgewählt aus der Gruppe bestehend aus Leinsamenöl, Japanischem Basilikumöl und Perillaöl umfasst.

4. Fett- oder Ölzusammensetzung gemäß mindestens einem der Ansprüche 1 bis 3, wobei ein Gehalt des Rosmarinextrakts als die Komponente (B) 0,008 bis 0,14 Massen-% beträgt.

5. Fett- oder Ölzusammensetzung gemäß mindestens einem der Ansprüche 1 bis 3, wobei ein Gehalt des Rosmarinextrakts als die Komponente (B) 0,016 bis 0,1 Massen-% beträgt.

6. Fett- oder Ölzusammensetzung gemäß mindestens einem der Ansprüche 1 bis 5, wobei ein Verhältnis eines Gehalts der α-Linolensäure in den Fettsäurebestandteilen des Fetts oder Öls als die Komponente (A) zu einem Gehalt des Rosmarinextrakts als die Komponente (B) in der Fett- oder Ölzusammensetzung, [C18:3/(B)], 50 bis 25.000 beträgt.

7. Fett- oder Ölzusammensetzung gemäß mindestens einem der Ansprüche 1 bis 5, wobei ein Verhältnis eines Gehalts der α-Linolensäure in den Fettsäurebestandteilen des Fetts oder Öls als die Komponente (A) zu einem Gehalt des Rosmarinextrakts als die Komponente (B) in der Fett- oder Ölzusammensetzung, [C18:3/(B)], 100 bis 10.000 beträgt.

8. Fett- oder Ölzusammensetzung gemäß mindestens einem der Ansprüche 1 bis 5, wobei ein Verhältnis eines Gehalts der α-Linolensäure in den Fettsäurebestandteilen des Fetts oder Öls als die Komponente (A) zu einem Gehalt des Rosmarinextrakts als die Komponente (B) in der Fett- oder Ölzusammensetzung, [C18:3/(B)], 300 bis 5.000 beträgt.

9. Fett- oder Ölzusammensetzung gemäß mindestens einem der Ansprüche 1 bis 8, wobei ein Gehalt des Dillextrakts als die Komponente (C) 0,00002 bis 0,05 Massen-% beträgt.

10. Fett- oder Ölzusammensetzung gemäß mindestens einem der Ansprüche 1 bis 8, wobei ein Gehalt des Dillextrakts als die Komponente (C) 0,0001 bis 0,01 Massen-% beträgt.

11. Fett- oder Ölzusammensetzung gemäß mindestens einem der Ansprüche 1 bis 10, wobei ein Massenverhältnis eines Gehalts des Rosmarinextrakts als die Komponente (B) zu einem Gehalt des Dillextrakts als die Komponente (C), [(B)/(C)], 10 bis 150 beträgt.

12. Fett- oder Ölzusammensetzung gemäß mindestens einem der Ansprüche 1 bis 10, wobei ein Massenverhältnis eines Gehalts des Rosmarinextrakts als die Komponente (B) zu einem Gehalt des Dillextrakts als die Komponente (C), [(B)/(C)], 16 bis 100 beträgt.

13. Fett- oder Ölzusammensetzung gemäß mindestens einem der Ansprüche 1 bis 10, wobei ein Massenverhältnis eines Gehalts des Rosmarinextrakts als die Komponente (B) zu einem Gehalt des Dillextrakts als die Komponente (C), [(B)/(C)], 40 bis 100 beträgt.

14. Fett- oder Ölzusammensetzung gemäß mindestens einem der Ansprüche 1 bis 13, umfassend 95 bis 99,95 Massen-% des Fetts oder Öls als die Komponente (A).

15. Fett- oder Ölzusammensetzung gemäß mindestens einem der Ansprüche 1 bis 14, wobei ein Gehalt an Triacylglycerol in dem Fett oder Öl als die Komponente (A) 78 bis 100 Massen-% beträgt.

## Revendications

1. Composition d'huile/graisse, comprenant les constituants suivants (A), (B), et (C) :
(A) une huile/graisse comprenant des acides gras constitutifs comprenant de 15 à 60 % en masse d'acide α-linolénique ;
(B) de 0,001 à 0,18 % en masse d'extrait de romarin ; et
(C) un extrait d'aneth,
dans laquelle un rapport massique entre une teneur du constituant (B) et une teneur du constituant (C), [(B)/(C)] va de 2 à 200, dans laquelle
l'extrait de romarin peut être obtenu en soumettant une ou plusieurs parties sélectionnées parmi le groupe constitué d'une feuille, d'une tige, d'un germe, d'une fleur, d'une branche, d'une racine, et d'une graine de romarin à une étape d'extraction sans traitement supplémentaire, ou d'extraction après pulvérisation, coupe, ou séchage, en utilisant de l'eau, de la vapeur d'eau, un alcool, du dioxyde de carbone sous-critique ou supercritique, une huile/graisse comestible ou un mélange de ceux-ci en tant que solvant d'extraction, et
l'extrait d'aneth peut être obtenu en soumettant une ou plusieurs parties sélectionnées parmi le groupe constitué d'une feuille, d'une tige, d'un germe, d'une fleur, d'une branche, d'une racine, d'un fruit, et d'une graine d'aneth à une étape d'extraction sans traitement supplémentaire, ou d'extraction après pulvérisation, coupe, ou séchage, en utilisant de l'eau, de la vapeur d'eau, un alcool, du dioxyde de carbone sous-critique ou supercritique, une huile/graisse comestible ou un mélange de ceux-ci en tant que solvant d'extraction.

2. Composition d'huile/graisse selon la revendication 1, dans laquelle une teneur en acide α-linolénique dans les acides gras constitutifs de l'huile/graisse en tant que constituant (A) va de 15 à 50 % en masse.

3. Composition d'huile/graisse selon la revendication 1 ou 2, dans laquelle le constituant (A) comprend au moins une ou deux ou plusieurs huiles/graisses sélectionnées parmi le groupe constitué d'huile de lin, d'huile de basilic japonais, et d'huile de perille.

4. Composition d'huile/graisse selon l'une quelconque des revendications 1 à 3, dans laquelle une teneur en extrait de romarin en tant que constituant (B) va de 0,008 à 0,14 % en masse.

5. Composition d'huile/graisse selon l'une quelconque des revendications 1 à 3, dans laquelle une teneur en extrait de romarin en tant que constituant (B) va de 0,016 à 0,1 % en masse.

6. Composition d'huile/graisse selon l'une quelconque des revendications 1 à 5, dans laquelle un rapport entre une teneur en acide α-linolénique dans les acides gras constitutifs d'huile/graisse en tant que constituant (A) et une teneur en extrait de romarin en tant que constituant (B) dans la composition d'huile/graisse, [C18:3/(B)], va de 50 à 25 000.

7. Composition d'huile/graisse selon l'une quelconque des revendications 1 à 5, dans laquelle un rapport entre une teneur en acide α-linolénique dans les acides gras constitutifs d'huile/graisse en tant que constituant (A) et une teneur en extrait de romarin en tant que constituant (B) dans la composition d'huile/graisse, [C18:3/(B)], va de 100 à 10 000.

8. Composition d'huile/graisse selon l'une quelconque des revendications 1 à 5, dans laquelle un rapport entre une teneur en acide α-linolénique dans les acides gras constitutifs d'huile/graisse en tant que constituant (A) et une teneur en extrait de romarin en tant que constituant (B) dans la composition d'huile/graisse, [C18:3/(B)], va de 300 à 5 000.

9. Composition d'huile/graisse selon l'une quelconque des revendications 1 à 8, dans laquelle une teneur en extrait d'aneth en tant que constituant (C) va de 0,00002 à 0,05 % en masse.

10. Composition d'huile/graisse selon l'une quelconque des revendications 1 à 8, dans laquelle une teneur en extrait d'aneth en tant que constituant (C) va de 0,0001 à 0,01 % en masse.

11. Composition d'huile/graisse selon l'une quelconque des revendications 1 à 10, dans laquelle un rapport massique entre une teneur en extrait de romarin en tant que constituant (B) et une teneur en extrait d'aneth en tant que constituant (C), [(B)/(C)], va de 10 à 150.

12. Composition d'huile/graisse selon l'une quelconque des revendications 1 à 10, dans laquelle un rapport massique entre une teneur en extrait de romarin en tant que constituant (B) et une teneur en extrait d'aneth en tant que constituant (C), [(B)/(C)], va de 16 à 100.

13. Composition d'huile/graisse selon l'une quelconque des revendications 1 à 10, dans laquelle un rapport massique entre une teneur en extrait de romarin en tant que constituant (B) et une teneur en extrait d'aneth en tant que constituant (C), [(B)/(C)], va de 40 à 100.

14. Composition d'huile/graisse selon l'une quelconque des revendications 1 à 13, comprenant de 95 à 99,95 % en masse d'huile/graisse en tant que constituant (A).

15. Composition d'huile/graisse selon l'une quelconque des revendications 1 à 14, dans laquelle une teneur en triacylglycérols dans l'huile/graisse en tant que constituant (A) va de 78 à 100 % en masse.
